# NEUE EUROPÄISCHE PATENTSCHRIFT

(11) **EP 0 790 448 B2**
(45) Veröffentlichungstag und Bekanntmachung des Hinweises auf die Entscheidung über den Einspruch: **02.11.2006**
(45) Hinweis auf die Patenterteilung: 16.04.2003
(21) Anmeldenummer: 97101770.2
(22) Anmeldetag: 05.02.1997
(51) Int. Cl.: F16K 27/04, E03C 1/042

(54) **Sanitärarmatur**
Sanitary fitting
Armature sanitaire

(30) Priorität: 14.02.1996 DE 19605328
(43) Veröffentlichungstag der Anmeldung: 20.08.1997
(73) Patentinhaber: Hansgrohe AG, 77761 Schiltach (DE)
(72) Erfinder: Lorch, Werner, 78713 Schramberg (DE); Mantel, Ralf, 77793 Gutach (DE)
(74) Vertreter: Patentanwälte Ruff, Wilhelm, Beier, Dauster & Partner

(56) Entgegenhaltungen:
- EP-A- 0 300 360
- EP-A- 0 389 814
- EP-A- 0 576 391
- DE-A- 3 009 599
- DE-A- 3 432 731
- DE-A- 3 819 420
- DE-A- 3 826 064
- US-A- 3 761 967

## Beschreibung

Die Erfindung geht aus von einer Sanitärarmatur, die insbesondere zur Unterputzmontage geeignet ist.

Es ist bereits ein thermostatisches Mischventil dieser Art bekannt (DE 38 19 420 A1), bei dem das Gehäuse des Mischventils in ein Anschlußgehäuse mit drei Anschlüssen und ein Aufsatzgehäuse unterteilt ist. Das Anschlußgehäuse weist drei Verbindungsöffnungen für Ansätze des Aufsatzgehäuses auf, wobei die Dichtung innerhalb der zylindrischen Mantelflächen der Verbindungsöffnungen geschieht.

Ebenfalls bekannt ist eine sanitäre Armatur, die in einem Unterputz-Einbaukasten angebracht werden kann (CH 661 551 A5). Hier enthält die Armatur einen Bacickörper, der alle nötigen Öffnungen und-Durchbrechungen aufweist, in die die Absperrorgane und das Mischventil eingesetzt werden können.

Weiterhin ist eine Anschiußanordnung für eine sanitäre Mischarmatur bekannt (DE-A1-3826064), bei der ein Basisteil eine Trennfläche zur Verbindung mit einem Armaturengrundkörperaufweist. Die Trennfläche dient dazu, die beiden Teile miteinander zu verschrauben. Zwischen dem Basisteil und dem Armaturengrundkörper ist ein Einsatz vorgesehen, der die Wasserführung zwischen dem Basisteil und dem Armaturengrundkörper übernimmt.

Weiterhin ist eine Anschlußvorrichtung für eine sanitäre Mischarmatur bekannt (EP-A1-576391), bei der ein Anschlußgehäuse mit Anschlüssen für Kalt- und Warmwasser vorhanden ist. An dem Anschlußgehäuse kann ein Armaturengehäuse befestigt werden. Zwischen dem Anschlußgehäuse und dem Armaturengehäuse ist ein Verbindungsstück vorhanden, das die Wasserführung zwischen dem Anschlußgehäuse und dem Armaturengehäuse übernimmt.

Der Erfindung liegt die Aufgabe zugrunde, eine Sanitärarmatur zu schaffen, die sich einfach montieren läßt, dem Installateur eine komfortable Möglichkeit bietet, die vorgeschriebene Leitungsspülung vorzunehmen, und die auch in montiertem Zustand die einfache Möglichkeit der Wartung bietet.

Zur Lösung dieser Aufgabe schlägt die Erfindung eine sanitäre Mischarmatur mit den im Anspruch 1 bzw. 2 aufgeführten Merkmalen vor. Weiterbildungen der Erfindung sind Gegenstand von abhängigen Ansprüchen.

Die von der Erfindung vorgeschlagene Sanitärarmatur wird so montiert, daß zunächst das Basisteil ohne den Armaturengrundkörper mit den in einer Wandöffnung vorhandenen Installationsleitungen der Hausinstallation verbunden wird. Sobald dies erfolgt ist und eine möglicherweise vorhandene Verfliesung vervollständigt ist, wird anschließend der Armaturengrundkörper an dem Basisteil angebracht, beispielsweise mit Hilfe von Schrauben festgeschraubt. Anschließend kann dann eine Abdeckrosette oder eine sonstige Abdeckung angebracht werden. Das Abnehmen des Armaturengrundkörpers ist auch weiterhin noch möglich.

Das Basisteil dient also ausschließlich zur Verbindung mit der Hauswasserinstallation, während die verschiedenen Durchgänge zur Verbindung mit den Teilen des Mischventils in dem Armaturengrundkörper angeordnet sind. Es wird möglich, mit einem Basisteil für mehrere unterschiedlich gestaltete Armaturengrundkörper auszukommen.

Insbesondere kann vorgesehen sein, daß die einander zugeordneten Trennflächen des Basisteils und des Armaturengrundkörpers als ebene Flächen ausgebildet sind. Dies kann die Montage erleichtern, da es nicht mehr erforderlich ist, vorspringende Teile In entsprechende Vertiefungen einzufädeln.

In nochmaliger Weiterbildung der Erfindung kann vorgesehen sein, daß die Durchtrittsöffnungen und/oder die Durchgangsöffnungen in mindestens einer der Trennflächen von Nuten zur Aufnahme von Dichtungen umgeben sind. Die Anbringung der Dichtungen in Nuten innerhalb einer ebenen Fläche hat den Vorteil, daß beim Anbringen des Armaturengrundkörpers an dem Basisteil nicht die Gefahr besteht, daß Dichtungen gequetscht und möglicherweise auch beschädigt werden.

Insbesondere kann nach einem weiteren Vorschlag der Erfindung vorgesehen sein, daß die Nuten zur Aufnahme der Dichtungen in der Trennfläche des Basisteils angeordnet sind.

Die Erfindung kann bei Sanitärarmaturen Anwendung finden, bei denen das Mischwasser aus der Armatur direkt entnommen wird. Sie kann aber ebenfalls mit Vorteil bei solchen Armaturen Anwendung finden, bei denen das Mischwasser wiederum durch eine unter Putz durch die Wand geführte Leitung entnommen wird. Für diesen Fall kann vorgesehen sein, daß das Basisteil mindestens einen weiteren Anschluß für eine von der Armatur wegführende Mischwasserleitung und die Trennfläche eine zugeordnete Durchtrittsöffnung für das Mischwasser aufweist, die mit dem Aufnahmeraum für das Mischventil verbunden ist. Auch diese Durchtrittsöffnung kann in der erwähnten Weise abgedichtet werden.

Selbstverständlich ist es auch möglich, daß das Basisteil eine weitere wegführende Mischwasserleitung aufweist, die beispielsweise zu einer Handbrause führt, während die erste Mischwasserleitung zu einem Wannenauslauf führt.

Insbesondere schlägt die Erfindung vor, daß der Grundkörper von dem Basisteil in dessen montiertem Zustand wieder lösbar una abnehmbar und auch wieder anbringbar sein kann.

Zur Erleichterung der Installation kann vorgesehen sein, daß an dem Basisteil anstelle des Armaturengrundkörpers ein Spülblock angebracht werden kann, der zu den Durchtrittsöffnungen des Basisteils führende, ggf. durch Stopfen verschließbare Anschlüsse aufweist. Dieser Spülblock kann dazu dienen, nach Herstellung der Installation die Installation auf Dichtigkeit zu überprüfen. So lassen sich beispielsweise an den Anschlüssen Manometer oser Druckschläuche anbringen. Dieses Überprüfen der Hausinstallation auf Dichtigkeit geschieht am Sinnvollsten ohne den Armaturengrundkörper.

Der erwähnte Spülblock kann weiterhin zum Schutz der Armaturwährend des Fertigstellens des Verputzes und der Verfliesung dienen. Daher wird erfindungsgemäß die Sanitärarmatur in der Weise geliefert, daß an dem Basistell der Spülblock angebracht ist. Dies geschieht vorteilhafterweise mit Hilfe der gleichen Befestigungsmittel, die auch zum Befestigen des Armaturengrundkörpers dienen, also beispielsweise mit Schrauben. Diese können dann zu dem erwähnten Zweck weiter verwendet werden.

Insbesondere kann erfindungsgemäß vorgesehen sein, daß bei montiertem Spülblock die Durchtrittsöffnungen der Trennfläche des Basisteils durch Trennwände des Spülblocks gegenseitig abgedichtet sind. Dadurch kann ein getrenntes Überprüfen der einzelnen Leitungszweige auf Dichtigkeit erfolgen. Nach Durchführung der Überprüfung des Leitungssystems und Herstellung der Verfliesung wird dann der Spülblock entfernt und der Armaturengrundkörper, ggf. zusammen mit dem in ihm bereits untergebrachten Mischventil, befestigt.

Insbesondere kann der Spülblock derart ausgebildet sein, daß er den Deckel eines Unterputzkastens bildet. Dies kann beispielsweise auch dadurch geschehen, daß er mit dem Unterputzkasten direkt verbunden ist, so daß er nach Montage von diesem abgetrennt wird.

Nach Abnahme oder Abtrennung des Spülblocks nach der Installation kann dieser vom Installateur an den Hersteller zur Wiederverwendung oder zum Recycling zurückgegeben werden. Bei der Wiederverwendung braucht der Hersteller nur die vom Installateur aus den Anschlüssen herausgenommenen und nicht zurückgebrachten Stopfen erneut einzusetzen.

Der Spülblock könnte auch so ausgebildet werden, daß er das Armaturenbasisteil in dessen Außenkonturen so weit umschließt, daß ein eigenes Unterputzgehäuse nicht mehr erforderlich ist.

Außerdem ist es möglich, den Spülblock derart mit einer das Basisteil der Armatur umgebenden Isolierung zu kombinieren, daß Spülblock und Isolierung zusammen gleichzeitig eine Verpackung für das Basisteil bilden.

Nach Montage kann der Spülblock oder ein Teil des Spülblocks von der Isolierung und von dem Basisteil abgenommen werden, wobei die Isolierung dann in der Wand verbleiben kann.

Ein erfindungswesentliches Merkmal besteht darin daß der Armaturengrundkörper je einen Sicherheitseinsatz, für den Kaltwasser- und den Warmwasser-Durchgang des Armaturengrundkörpers aufweist und die Wasserführung durch den Sicherheitseinsatz hindurchgeht. Der Sicherheitseinsatz kann beispielsweise einen Rückflußverhinderer, ein Sieb oder eine Druckreduzierung enthalten.

Es kann bei einer Sanitärarmatur mit den Merkmalen des Anspruchs 1 vorgesehen sein, dass der Sicherheitseinsatz über die Trennfläche des Armaturengrundkörpers hinaus in die Durchtrittsöffnung des Basisteils hinein ragt.
Dadurch, dass der Sicherheitseinsatz über die Trennfläche des Armaturengrundkörpers hinaus in die Durchtrittsöffnung des Basisteils hinein ragt, lässt sich trotz des Aufbaus aus mehreren Teilen eine flache Bauart ermöglichen. Falls die Abdichtung in der ebenen, die Durchtrittsöffnung umgebenden Trennfläche erfolgt, können die hineinragenden Teile des Sicherheitseinsatzes einen gewissen Abstand von den Rändern der Durchtrittsöffnung aufweisen, so dass das leichte Einsetzen und Verbinden von Basisteil und Armaturengrundkörper hierdurch nicht beeinträchtigt wird.

Erfindungsgemäß kann bei einer Mischarmatur mit den Merkmalen des Anspruchs 2 vorgesehen sein, dass der Sicherheitseinsatz eine Absperreinrichtung aufweist.
Die Absperreinrichtung des Sicherheitseinsatzes kann zum Absperren der Wasserzuführung benutzt werden, so dass auch bei montierter Sanitärarmatur ohne Abstellen eines Hauptventils das Mischventil entfernt oder ausgetauscht werden kann.

Insbesondere schlägt die Erfindung bei einer Mischarmatur mit den Merkmalen des Anspruchs 2 vor, dass die Absperreinrichtung des Sicherheitseinsatzes bei montiertem Armaturengrundkörper von außen her noch zugänglich ist.

In nochmaliger Weiterbildung der Erfindung nach Anspruch 1 kann vorgesehen sein, dass der Sicherheitseinsatz von der der Trennfläche des Armaturengrundkörpers abgewandten Vorderseite her in diesen einsetzbar, beispielsweise einschraubbar, ist.

Erfindungsgemäß kann in Weiterbildung die Art der Verbindung zwischen dem Basisteil und dem Armaturengrundkörper so ausgebildet werden, daß bei ungeänderter Stellung des Armaturengrundkörpers, insbesondere des Mischventils, das Basisteil in mindestens zwei verschiedenen Stellungen mit der Hausinstallation verbunden werden kann.

Dies gilt insbesondere für den Mischwasserabgang, insbesondere dann, wenn an diesen bereits ein Absperr- oder Umstellorgan oder beides angebracht ist. Diese Organe werden in der Praxis je nach Vorliebe des Installateurs oder den örtlichen Gegebenheiten, entweder nach oben oder nach unten installiert. Hier ist es dann sinnvoll, den Armaturengrundkörper gegenüber dem Basisteil in verschiedenen Stellungen anordnen zu können, damit nach Fertigstellung der Installation das Bedienelement zum Benutzer hin immer die gleiche griffgünstige Lage hat.

Es wäre denkbar, daß zum Beispiel an einer Badewanne der Mischwasserabgang nach unten montiert wird, während in der unmittelbar daneben installierten Dusche der Abgang nach oben montiert wird. Es kann dann für den Benutzer gewährleistet werden, daß die Bedienung an beiden Armaturen gleich ist.

Was hier zu der Möglichkeit des Umdrehens im Hinblick auf den Mischwasseranschluß gesagt wurde, gilt natürlich auch für die Zuleitungen.

Weitere Merkmale, Einzelheiten und Vorzüge ergeben sich aus den Patentansprüchen, deren Wortlaut durch Bezugnahme zum Inhalt der Beschreibung gemacht wird, derfolgenden Beschreibung einer bevorzugten Ausführungsform der Erfindung sowie anhand der Zeichnung. Hierbei zeigen:
- Fig. 1: einen schematischen Längsschnitt durch eine Sanitärarmatur nach der Erfindung;
- Fig. 2: eine Seitenansicht der Armatur der Fig. 1 von vorne in Fig. 1;
- Fig. 3: eine Aufsicht auf die Armatur aus Richtung des Bedienelements mitteilweise weggelassenem Armaturengrundkörper;
- Fig. 4: einen der Fig. 1 entsprechenden Längsschnitt durch das Basisteil des Armaturengrundkörpers mit aufgesetztem Spülblock in einem Unterputzkasten.

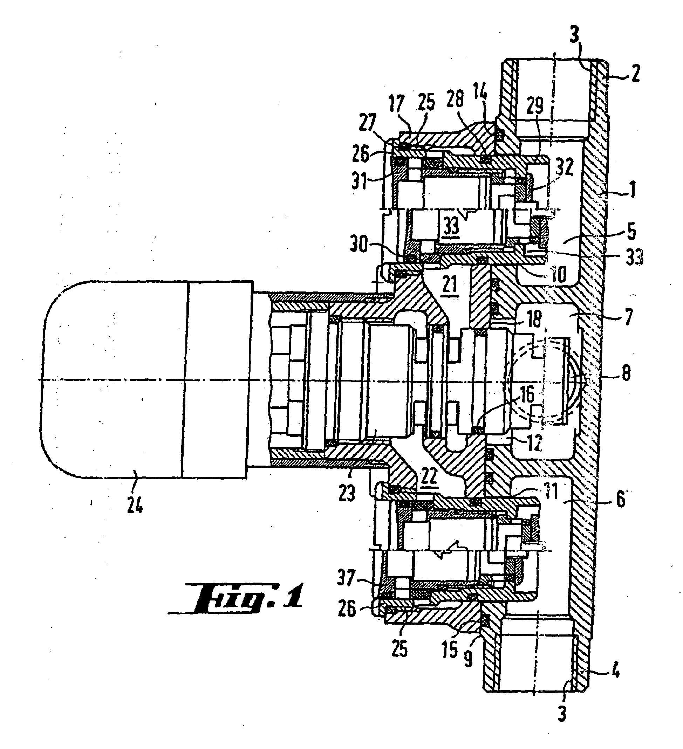

Die in Fig. 1 im Schnitt dargestellte Sanitärarmatur enthält ein Basisteil 1, das zur Montage unter Putz geeignet und bestimmt ist. Das Basisteil 1 enthält in seinem in Fig. 1 oberen Bereich einen ersten Anschluß 2 mit einem Innengewinde 3 zur Verbindung mit einer in der Wand geführten Wasserleitung, beispielsweise für kaltes Wasser.

An der gegenüberliegenden Seite enthält das Basisteil einen zweiten Anschluß 4 ebenfalls mit einem Innengewinde 3 zum Anschluß an eine zweite Leitung, in diesem Fall also die Warmwasserleitung.

Innerhalb des Basisteils 1 führt der erste Anschluß 2 in einen abgeschlossenen Innenraum 5, während der zweite Anschluß 4 zu einem abgeschlossenen Innenraum 6 führt.

In dem Basisteil 1 ist ein dritter Innenraum 7 angeordnet, in den ein nur angedeuteter Anschluß 8 führt. Hierbei kann es sich beispielsweise um eine zu einem Wannenauslauf führende Mischwasserleitung handeln.

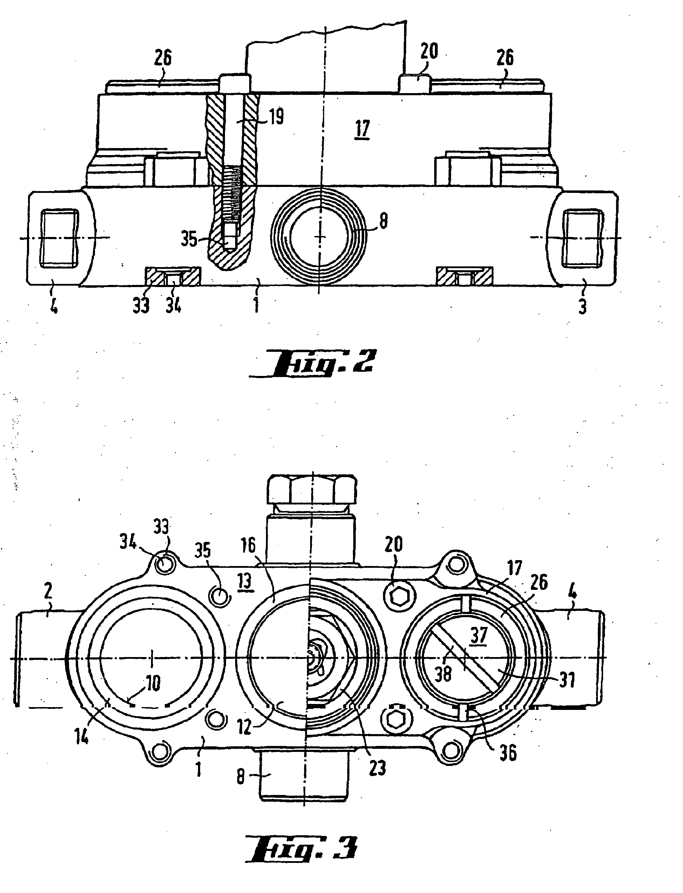

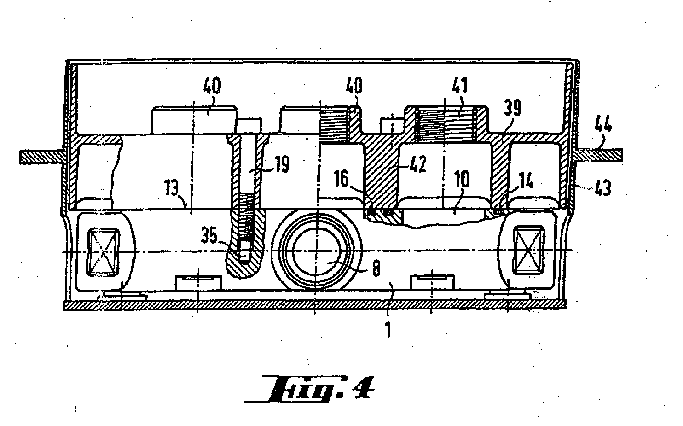

Das Basisteil 1 der Armatur ist so ausgebildet, daß seine in Fig. 1 rechte Seite zum Boden einer Wandöffnung führt, während die gegenüberliegende, in Fig. 1 linke Vorderseite 9 als über ihren größten Teil ebene Trennfläche ausgebildet ist. In dieser ebenen, als Trennfläche ausgebildeten Vorderseite 9 münden aus jedem Innenraum 5, 6, 7 je eine Durchtrittsöffnung 10, 11, 12, siehe insbesondere die Fig. 3, in der diese Durchtrittsöffnungen 10, 12 zu sehen sind.

Jede Durchtrittsöffnung 10, 11, 12 ist in der als Trennfläche 13 ausgebildeten ebenen Vorderseite 9 des Basisteils 1 von einer konzentrisch zu der Durchtrittsöffnung verlaufenden Nut 14, 15, 16 umgeben, in der jeweils ein Dichtring eingelegt ist.

Von der Vorderseite her, in Fig. 1 also von links, ist an dem Basisteil 1 ein Armaturengrundkörper 17 befestigt, dessen dem Basisteil 1 zugewandte Rückseite eine ebenfalls ebene Trennfläche 18 bildet. In dieser Trennfläche 18 münden ebenfalls Durchgänge für Wasser, wie im folgenden noch erläutert wird. Das Befestigen des Armaturengrundkörpers 17 geschieht mit Hilfe von in den Basisteil 1 eingreifenden Schrauben 19 mit Schraubenköpfen 20, siehe auch Fig. 2 und 3.

Der Armaturengrundkörper weist von den Durchgangsöffnungen ausgehende Durchgänge 21 und 22 auf, die zu einer Aufnahme für ein Thermostat-Mischventil 23 führen. Das Mischventil 23 ist von der Vorderseite her in den Armaturengrundkörper 17 eingeschraubt. Von der Außenseite her ist es mit Hilfe eines Bediengriffes 24 verstellbar.

Der Armaturengrundkörper 17 weist in axialer Verlängerung seiner Durchgangsöffnungen je eine mit einem Gewinde 25 versehene Öffnung auf, in die ein Sicherheitseinsatz 26 von der Vorderseite des Armaturengrundkörpers her eingeschraubt ist. Dieser Sicherheitseinsatz 26 ist gegenüber dem Armaturengrundkörper mit Hilte einer Dichtung 27 abgedichtet. Der Sicherheitseinsatz 26 ist im Bereich der Durchgangsöffnungen diesem gegenüber mit einer weiteren Dichtung 28 abgedichtet. Hier sind die Dichtungen 27, 28 in Nuten untergebracht, die in zylindrischen Mantelflächen liegen. Dies ist an dieser Stelle nicht kritisch, da das Befestigen der Sicherheitseinsätze 26 im Armaturengrundkörper 17 fabrikmäßig erfolgt.

Die Sicherheitseinsätze 26 ragen mit ihrem zu dem Basisteil gerichteten Endbereich 29 über die Trennfläche 18 hinaus und durch die Durchtrittsöffnungen 10, 11 hindurch in die Innenräume 5 bzw. 6 des Basisteils 1 hinein. Dadurch wird trotz der eine gewisse Baulänge aufweisenden Sicherheitseinsätze 26 eine geringe Bautiefe derArmatur erreicht. Zwischen der Außenseite der Sicherheitseinsätze 26 und dem Umfang der Durchtrittsöffnungen 10, 11 kann ein Spiel vorhanden sein, da die Abdichtung durch die Dichtungen 14, 15 erfolgt.

In der Figur sind die beiden Sicherheitseinsätze 26 längs einer Mittellinie in ihren beiden möglichen Stellungen gezeichnet. In jedem Sicherheitseinsatz 26 ist ein Sieb 30 angeordnet, durch das das Wasser in die Durchgänge 21, 22 gelangen kann. Jeder Sicherheitseinsatz 26 weist eine Innenhülse 31 auf, die gegenüber dem Einsatz 26 abgedichtet ist und mit diesem über ein Gewinde verbunden ist. Durch Verdrehen der Innenhülse 31 kann diese in der Fig. 1 nach links bewegt werden, bis an dem in das Basisteil hineinragenden Ende eine dort angeordnete Ventilplatte 32 einen Durchtritt des Wassers verhindert. Durch Verdrehen der Innenhülse 31 in umgekehrte Richtung wird die Ventilplatte 32 von einer Schulter 33 abgehoben, so daß das Wasser an der Schulter 33 durch radiale Öffnungen der Innenhülse 31 in diese einströmen kann. Innerhalb der Innenhülse 31 ist ein Rückflußverhinderer 33 eingebaut.

Fig. 2 zeigt eine Seitenansicht der Anordnung der Fig. 1, beispielsweise von vorne, mit abgebrochen dargestelltem Mischventil.

Das Basisteil 1 enthält seitliche, in Fig. 2 im Schnitt zu sehende Ansätze 33 mit Löchern 34, durch die hindurch das Basisteil 1 an einer Unterlage, beispielsweise der Rückwand einer Wandausnehmung, angeschraubt werden kann.

In dem Basisteil 1 sind mit Gewinde versehene Sacklöcher 35 vorhanden, die zur Aufnahme der Schrauben 19 dienen, mit denen der Armaturengrundkörper 17 am Basisteil 1 angeschraubt wird.

Fig. 3 zeigt eine Stirnansicht, wobei in der rechten Hälfte der Fig. 3 der Armaturengrundkörper 17 an dem Basisteil 1 angebracht ist, während in der linken Hälfte der Fig. 3 die die Trennfläche 13 bildende Vorderseite 9 des Basisteils zu sehen ist. Links ist bei der Durchtrittsöffnung 10 die Nut 14 zu sehen, die die Öffnung 10 koaxial mit einem gewissen Abstand umgibt und zur Aufnahme einer Dichtung bestimmt ist.

Rechts in Fig. 3 ist der Sicherheitseinsatz 26 zu sehen. Der Sicherheitseinsatz weist in seinem Umfangsbereich zwei diametral angeordnete Kerben 36 zum Einsetzen eines Werkzeugs auf, mit denen er in die entsprechende Öffnung in das Gewinde 25 eingeschraubt wird.

Die in dem Sicherheitseinsatz 26 eingeschraubte, zur Außenseite hin durch eine Stirnwand 37 abgeschlossene Innenhülse 31 weist in dieser Stirnwand 37 eine diametral verlaufende Nut 38 auf, die zum Einsetzen eines Werkzeugs oder eines Schlüssels dienen kann, damit die Innenhülse 31 gegenüber dem Sicherheitsetnsatz 26 verdreht werden kann. Damit kann die Innenhülse in der bereits geschilderten Weise dazu verwendet werden, die Strömung des Wassers durch den Sicherheitseinsatz 26 abzustellen, damit bei montiertem Armaturengrundkörper das Mischventil eingesetzt oder herausgenommen werden kann.

Fig. 4 zeigt einen Längsschnitt durch das Basisteil 1 der erfindungsgemäßen Sanitärarmatur in der Weise, wie die Armatur dem Installateur geliefert wird, damit dieser sie installieren kann. Von dem Basisteil 1 ist der Armaturengrundkörper 17 abgenommen. In der ebenen Trennfläche 13 sind in den Nuten 14, 15 und 16 die entsprechenden Dichtungen eingesetzt. Anstelle des Armaturengrundkörpers ist mit dem Basisteil 1 ein Spülblock 39 verschraubt. Der Spülblock 39 weist Durchgangsöffnungen für die Befestigungsschrauben 19 auf. Diese greifen in die erwähnten Gewindebohrungen 35 ein.

Der Spülblock 39 weist an seiner dem Basisteil abgewandten Vorderseite drei Anschlüsse 40 mit Innengewinde 41 auf. Jeder Anschluß 40 ist einer Durchtrittsöffnung 10, 11, 12 des Basisteils 1 zugeordnet. Zwischen den einzelnen Anschlüssen 40 sind die Anschlüsse bzw. die Durchtrittsöffnungen 10 umgebende Zwischenwände 42 vorhanden, die so angeordnet bzw. ausgebildet sind, daß sie mit den in den Nuten 14 bis 16 angeordneten Dichtungen zusammenwirken. Dadurch führt jeder Anschluß abgedichtet über eine Öffnung 10 bis 12 genau zu einem der in dem Basisteil 1 ausgebildeten Innenräume 5, 6, 7. Man kann also die Anschlüsse 40 durch Stopfen verschließen oder Manometer anbringen und an einer anderen Stelle der Leitungsinstallation Druck aufbringen, um dadurch die einzelnen Zweige der Leitungen auf Druck zu überprüfen.

Der Spülblock 39 ist zusammen mit dem Basisteil 1 in einem Unterputzkasten 43 untergebracht, der an seiner Außenseite einen umlaufenden Flansch 44 aufweist. Die Montage des Basisteils 1 geschieht daher in einer Wandöffnung zusammen mit dem Unterputzkasten 43. Nach Verbinden des Basisteils 1 mit den Leitungen der Installation und dem Überprüfen der Installation auf Dichtigkeit kann dann ein Verputzen der Wand und/oder ein Verfliesen der Wandoberfläche durchgeführt werden. Erst wenn diese Maßnahmen alle beendet sind, wird der über die Wandoberseite vorstehende Teil des Unterputzkastens 43 abgetrennt und der Spülblock 39 abgeschraubt. Dann wird mit Hilfe derselben Schrauben 19 der Armaturengrundkörper, der fabrikmäßig vollständig montiert sein kann, an die Trennfläche 13 des Basisteils 1 angesetzt, wobei die Endbereiche 29 der Sicherheitseinsätze 26 mit Spiel durch die zugehörigen Durchtrittsöffnungen 10, 11, hindurchgefädelt werden. Anschließend erfolgt die Verschraubung.

Bei der Ausführungsform in Fig. 4 ist der Spülblock 39 so gestaltet, daß er mit seinem Randflansch unmittelbar innerhalb des Randflansches des Unterputzkastens liegt. Er ist mit dichtem Abstand von dem Rand des Unterputzkastens in diesen eingesetzt. Der Spülblock 39 könnte auch den Deckel des Unterputzkastens bilden.

Ebenfalls möglich wäre es, daß der Spülblock 39 mit seinem Randbereich bis zu der der Wand zugewandten Seite des Basisteils 1 reicht, so daß der Spülblock 39 das Basisteil 1 praktisch wie ein Unterputzkasten umgibt.

Ebenfalls möglich ist es, den Spülblock 39 mit einer das Basisteil der Armatur umgebenden Isolierverschalung zu kombinieren, wobei dann der Spülblock 39 und die Isolierung eine Transportverpackung bilden. Der Isolierteil kann dann nach Montage in der Wand verbleiben, während der Spülblock 39 dann abgenommen wird.

## Patentansprüche

1. Sanitärarmatur, mit
1.1 einem insbesondere zur Unterputzmontage bestimmten Basisteil (1), das
1.1.1 einen Anschluss (2) für eine Warmwasserleitung und einen Anschluss (4) für eine Kaltwasserleitung und
1.1.2 eine in montiertem Zustand des Basisteils zugängliche Trennfläche (13) aufweist,
1.2 einem Armaturengrundkörper (17), der
1.2.1 an dem Basisteil (1) befestigbar ist,
1.2.2 eine mit der Trennfläche (13) des Basisteils (1) zusammenwirkende Trennfläche (18) und
1.2.3 einen Aufnahmeraum für ein Mischventil (23) aufweist, in den
1.2.3.1 Öffnungen für kaltes und warmes Wasser führen, sowie mit
1.3 einem Mischventil (23), das
1.3.1 in den Aufnahmeraum einsetzbar ist,
**dadurch gekennzeichnet, dass**
1.4 die miteinander zusammenwirkenden Trennflächen (13, 18) des Basisteils (1) und des Armaturengrundkörpers (17) miteinander übereinstimmende Durchtrittsöffnungen (10, 11) für warmes und kaltes Wasser aufweisen,
1.5 der Armaturengrundkörper (17) je einen Sicherheitseinsatz (26) für den Kaltwasser- und für den Warmwassserdurchgang aufweist,
1.6 die Wasserführung durch den Sicherheitseinsatz (26) hindurchgeht und
1.7 der Sicherheitseinsatz (26) eine bei montiertem Armaturengrundkörper (17) zugängliche Absperreinrichtung aufweist.

2. Sanitärarmatur, mit
2.1 einem insbesondere zur Unterputzmontage bestimmten Basisteil (1), das
2.1.1 einen Anschluss (2) für eine Warmwasserleitung und einen Anschluss (4) für eine Kaltwasserleitung und
2.1.2 eine in montiertem Zustand des Basisteils zugängliche Trennfläche (13) aufweist,
2.2 einem Armaturengrundkörper (17), der
2.2.1 an dem Basisteil (1) befestigbar ist,
2.2.2 eine mit der Trennfläche (13) des Basisteils (1) zusammenwirkende Trennfläche (18) und
2.2.3 einen Aufnahmeraum für ein Mischventil (23) aufweist, in den
2.2.3.1 Öffnungen für kaltes und warmes Wasser führen, sowie mit
2.3 einem Mischventil (23), das
2.3.1 in den Aufnahmeraum einsetzbar ist,
**dadurch gekennzeichnet, dass**
2.4 die miteinander zusammenwirkenden Trennflächen (13, 18) des Basisteils (1) und des Armaturengrundkörpers (17) miteinander übereinstimmende Durchtrittsöffnungen (10, 11) für warmes und kaltes Wasser aufweisen,
2.5 der Armaturengrundkörper (17) je einen Sicherheitseinsatz (26) für den Kaltwasser- und für den Warmwassserdurchgang aufweist,
2.6 die Wasserführung durch den Sicherheitseinsatz (26) hindurchgeht,
2.7 der Sicherheitseinsatz (26) über die Trennfläche (18) des Armaturengrundkörpers (17) hinaus in die Durchtrittsöffnung(en) (10, 11) des Basisteils (1) hineinragt und
2.8 von der der Trennfläche (18) des Armaturengrundkörpers (17) abgewandten Vorderseite des Armaturengrundkörpers (17) her in diesen einsetzbar ist

3. Sanitärarmatur nach Anspruch 1 oder 2, bei der die Trennflächen (13, 18) eben sind.

4. Sanitärarmatur nach einem der Ansprüche 2 bis 4, bei der die Durchtrittsöffnungen (10, 11) in mindestens einer der Trennflächen (13, 18) von Nuten (14, 15) zur Aufnahme von Dichtungen umgeben sind.

5. Sanitärarmatur nach Anspruch 4, bei der die Nuten (14, 15) in der Trennfläche (13) des Basisteils (1) angeordnet sind.

6. Sanitärarmatur nach einem der vorhergehenden Ansprüche, bei der das Basisteil (1) mindestens einen weiteren Anschluss (8) für eine von der Armatur wegführende Mischwasserleitung und die Trennfläche (13) eine zugeordnete Durchtrittsöffnung (12) für das Mischwasser aufweist, die mit dem Aufnahmeraum für das Mischventil (23) verbunden ist.

7. Sanitärarmatur nach einem der vorhergehenden Ansprüche, bei der der Armaturengrundkörper (17) an dem Basisteil (1) in dessen montiertem Zustand anbringbar und wieder lösbar ist.

8. Sanitärarmatur nach Anspruch 7, bei der das Basisteil (1) derart ausgebildet ist, dass an ihm bei abgenommenem Armaturengrundkörper (17) ein Spülblock (39) anbringbar ist, der zu den Durchtrittsöffnungen (10-12) des Basisteils (1) führende gegebenenfalls durch Stopfen verschließbare Anschlüsse (40) aufweist.

9. Sanitärarmatur nach Anspruch 8, bei der das Basisteil derart ausgebildet ist, dass bei montiertem Spülblock (39) die Durchtrittsöffnungen (10-12) der Trennfläche (13) des Basisteils (1) durch Trennwände (42) des Spülblocks (39) gegenseitig abgedichtet sind.

10. Sanitärarmatur nach einem der vorhergehenden Ansprüche, bei der mindestens ein der Funktion der Sanitärarmatur dienendes Funktionsteil, insbesondere der Sicherheitseinsatz (26), vorzugsweise alle Funktionsteile über die Trennfläche (18) des Armaturengrundkörpers (17) hinaus in die Durchtrittsöffnung(en) (10, 11) des Basisteils (1) hineinragt bzw. hineinragen.

11. Sanitärarmatur nach einem der Ansprüche 9 oder 10, bei der der Sicherheitseinsatz (26) von der der Trennfläche (18) des Armaturengrundkörpers (17) abgewandten Vorderseite des Armaturengrundkörpers (17) her in diesen einsetzbar ist.

12. Sanitärarmatur nach einem der vorhergehenden Ansprüche, bei der die Verbindung zwischen dem Basisteil (1) und dem Armaturengrundkörper (17) bzw. ihre Befestigung aneinander derart ausgebildet ist, dass bei ungeänderter Stellung des Armaturengrundkörpers (17) das Basisteil (1) in mindestens zwei verschiedenen Stellungen mit der Hausinstallation verbindbar ist.

13. Sanitärarmatur nach einem der Ansprüche 8 bis 12, bei der der Spülblock (39) derart ausgebildet ist, dass er den Deckel eines Unterputzkastens (43) bildet.

14. Sanitärarmatur nach einem der Ansprüche 8 bis 13, bei der der Spülblock (39) mit einer Isolierung derart kombiniert ist, dass er zusammen mit dieser eine Verpackung für das Basistei! (10) bildet.

15. Sanitärarmatur nach Anspruch 14, bei der der Spülblock (39) von der Isolierung abnehmbar ist und diese nach der Montage in der Wand verbleibt.

## Claims

1. Sanitary fitting, with
1.1 a basic part (1) particularly meant for hidden installation, which features
1.1.1 a connection (2) for a hot water pipe and a connection (4) for a cold water pipe and
1.1.2 a partition surface (13) accessible in the mounted state of the basic part,
1.2 a fitting body (17),
1.2.1 which is fixable on the basic part (1),
1.2.2 with a partition surface (18) interacting with the partition surface (13) of basic part (1) and
1.2.3 features a receiving space for a mixing valve (23), in which
1.2.3.1 openings for cold and warm water are provided, as well as
1.3 a mixing valve (23), which is usable
1.3.1 in the receiving space,
**characterised in that**
1.4 the partition surfaces (13, 18) of the basic part (1) interacting with one another and of the fitting body (17) feature passage openings (10, 11) for warm and cold water, corresponding with one another,
1.5 the fitting body (17) that features a safety cartridge (26), each for the cold water and warm water passage,
1.6 the water delivery passes through the safety cartridge (26) and
1.7 the safety cartridge (26) features a fitting body (17) accessible in the case of a mounted accessible shut-off equipment.

2. Sanitary fitting, with
2.1 a basic part (1) particularly meant for hidden installation, which features
2.1.1 a connection (2) for a hot water pipe and a connection (4) for a cold water pipe and
2.1.2 a partition surface (13) accessible in mounted state of the basic part,
2.2 a fitting body (17), which
2.2.1 is fixable on the basic part (1),
2.2.2 a partition surface (18) interacting with the partition surface (13) of basic part (1) and
2.2.3 features a receiving space for a mixing valve (23), in which
2.2.3.1 openings for cold and warm water delivery, as well as
2.3 a mixing valve (23), which
2.3.1 is usable in the receiving space,
**characterised in that**
2.4 the mutually interacting partition surfaces (13,18) of the basic part (1) and the fitting body (17) feature corresponding passage openings (10,11) for warm and cold water,
2.5 the fitting body (17) features a safety cartridge (26) each for cold water and for warm water passage,
2.6 the water delivery occurs through the safety cartridge (26),
2.7 the safety cartridge (26) projects through the partition surface (18) of the fitting body (17) into the passage opening(s) (10, 11) of the basic part (1) and
2.8 from the front side of the fitting body (17) facing away from the partition surface (18) of the fitting body (17), is insertable into the latter.

3. Sanitary fitting according to claim 1 or 2, wherein the partition surfaces (13, 18) are plane.

4. Sanitary fitting according to one of claims 2 to 4, wherein the passage openings (10,11) at least in one of the partition surfaces (13,18) are surrounded by grooves (14,15) for receiving seals.

5. Sanitary fitting according to claim 4, wherein the grooves (14, 15) are arranged in the partition surface (13) of basic part (1).

6. Sanitary fitting according to one of the preceding claims, wherein the basic part (1) features at least one further connection (8) for a mixed water pipe leading away from the fitting and the partition surface (13) a corresponding passage opening (12) for mixed water, which is connected with the receiving space for the mixing valve (23).

7. Sanitary fitting according to one of the preceding claims, wherein the fitting body (17) is attachable to and detachable from the basic part (1) in its mounted state.

8. Sanitary fitting according to claim 7, wherein the basic part (1), in the case of a removed fitting body (17), is formed in such a manner that a washing block (39) is attachable to it and features connections (40) leading to the passage openings (10-12) of the basic part (1) or is closable with plugs.

9. Sanitary fitting according to claim 8, wherein the basic part is formed such that, with a mounted washing block (39), the passage openings (10-12) of the partition surface (13) of the basic part (1) are reciprocally sealed by means of partition walls (42) of the washing block (39).

10. Sanitary fitting according to one of the preceding claims, wherein at least one of the functioning parts serving the purpose of the sanitary fitting, particularly of the safety cartridge (26), preferably all functioning parts project(s) through the partition surface (18) of the fitting body (17) into the passage opening(s) (10,11) of the basic part (1).

11. Sanitary fitting according to one of claims 9 or 10, wherein the safety cartridge (26) is insertable from the front side of the fitting body (17) into same, facing away from the partition surface (18) of the fitting body (17).

12. Sanitary fitting according to one of the preceding claims, wherein the connection between the basic part (1) and the fitting body (17) or the fastening on one another is formed in such a manner that with an unchanged position of the fitting body (17), the basic part (1) is connectable with the house installation in at least two different positions.

13. Sanitary fitting according to one of claims 8 to 12, wherein the washing block (39) is formed in such a manner that it forms the cover of a hidden box (43).

14. Sanitary fitting according to one of claims 8 to 13, wherein the washing block (39) is combinable with insulation such that together with same it forms a packaging for the basic part (10).

15. Sanitary fitting according to claim 14, wherein the washing block (39) is removable from the insulation and same remains in the wall after installation.

## Revendications

1. Robinetterie sanitaire comprenant
1.1 une base (1) destinée notamment à un montage encastré et comportant
1.1.1 un branchement (2) pour une conduite d'eau chaude et un branchement (4) pour une conduite d'eau froide et
1.1.2 une surface de séparation (13) accessible lorsque la base est montée
1.2 un corps de base de la robinetterie (17)
1.2.1 susceptible d'être fixé sur la base (1) et comportant
1.2.2 une surface de séparation (18) interagissant avec la surface de séparation (13) de la base (1) et
1.2.3 un logement permettant de loger un mitigeur (23) et vers lequel sont dirigés
1.2.3.1 des orifices pour l'eau chaude et l'eau froide,
1.3 ainsi qu'un mitigeur (23)
1.3.1 susceptible d'être installé dans le logement prévu à cet effet,
**caractérisée en ce que**
1.4 les surfaces de séparation (13,18) de la base (1) et du corps de base de la robinetterie (17) interagissant sont munies d'orifices de passage (10,11) adaptés les uns aux autres et prévus pour l'eau chaude et l'eau froide,
1.5 le corps de base de la robinetterie (17) comporte un insert de sécurité (26) permettant le passage de l'eau chaude et de l'eau froide
1.6 la conduite d'eau traverse l'insert de sécurité (26) et
1.7 l'insert de sécurité (26) est pourvu d'un dispositif d'isolement accessible lorsque le corps de base de la robinetterie (17) est monté

2. Robinetterie sanitaire comprenant
2.1 une base destinée notamment à un montage encastré (1) et comportant
2.1.1 un branchement (2) pour une conduite d'eau chaude et un branchement (4) pour une conduite d'eau froide et
2.1.2 une surface de séparation (13) accessible lorsque la base est montée
2.2 un corps de base de robinetterie (17)
2.2.1 susceptible d'être fixé sur la base (1) et comportant
2.2.2 une surface de séparation (18) interagissant avec la surface de séparation (13) de la base (1) et
2.2.3 un logement prévu pour un mitigeur (23) vers lequel sont dirigés
2.2.3.1 des orifices pour l'eau chaude et l'eau froide ;
2.3. ainsi qu'un mitigeur
2.3.1 lequel peut être installé dans le logement prévu à cet,
**caractérisée en ce que**
2.4. les surfaces de séparation (13,18) de la base (1) et du corps de base de la robinetterie (17) interagissant sont munies d'orifices de passage (10,11) adaptés les uns aux autres et prévus pour l'eau chaude et l'eau froide
2.5 le corps de base de la robinetterie (17) est muni d'un insert de sécurité (26) permettant le passage de l'eau chaude et de l'eau froide
2.6 la conduite d'eau traverse l'insert de sécurité (26)
2.7 l'insert de sécurité (26) dépasse la surface de séparation (18) du corps de base de la robinetterie (17) vers le(s) orifice(s) de passage (10, 11) de la base (1) et
2.8 peut être introduit dans le corps de base de la robinetterie (17) depuis la face avant de ce dernier (17) opposée à la surface de séparation (18)

3. Robinetterie sanitaire selon la revendication 1 ou 2 où les surfaces de séparation (13, 18) sont planes.

4. Robinetterie sanitaire selon l'une quelconque des revendications 2 à 4 où les orifices de passage (10, 11) sont entourés dans au moins une des surfaces de séparation (13, 18) de rainures (14, 15) prévues pour recevoir les garnitures d'étanchéité.

5. Robinetterie sanitaire selon la revendication 4 où les rainures (14, 15) sont disposées dans la surface de séparation (13) de la base (1)

6. Robinetterie sanitaire selon l'une quelconque des revendications précédentes où la base (1) est munie d'un autre branchement (8) pour une conduite d'eau mélangée partant de la robinetterie et où la surface de séparation (13) est munie d'un orifice de passage (12) pour l'eau mélangée qui lui est affecté et qui communique avec le logement destiné au mitigeur (23)

7. Robinetterie sanitaire selon l'une quelconque des revendications précédentes où le corps de base de la robinetterie (17) peut être monté sur et démontée de la base (1) lorsque cette dernière est montée.

8. Robinetterie sanitaire selon la revendication 7 où la base (1) est réalisée de manière à permettre, lorsque le corps de base de la robinetterie (17) est démonté, la mise en place d'un bloc de rinçage (39) muni de raccordements (40) susceptibles d'être obturés par des bouchons et dirigés vers les orifices de passage (10-12) de la base (1).

9. Robinetterie sanitaire selon la revendication 8 où la base est réalisée de manière à assurer l'étanchéité mutuelle des orifices de passage (10-12) de la surface de séparation (13) de la base (1) par des parois de séparation (42) du bloc de rinçage (39) lorsque le bloc de rinçage (39) est monté.

10. Robinetterie sanitaire selon l'une quelconque des revendications précédentes où au moins un élément fonctionnel servant au fonctionnement de la robinetterie sanitaire, notamment l'insert de sécurité (26), de préférence tous les éléments fonctionnels, dépassent la surface de séparation (18) du corps de base de la robinetterie (17) vers le ou les orifice(s) de passage (10, 11) de la base (1).

11. Robinetterie sanitaire selon la revendication 9 ou 10 où l'insert de sécurité (26) peut être introduit dans le corps de base de la robinetterie (17) par la face avant de ce dernier (17) opposée à la surface de séparation (18).

12. Robinetterie sanitaire selon l'une quelconque des revendications où la liaison entre la base (1) et le corps de base de la robinetterie (17) ou sa fixation est réalisée de manière à permettre le raccordement de la base (1) à l'installation domestique dans au moins deux positions différentes, le corps de base de la robinetterie (17) restant dans une position inchangée.

13. Robinetterie sanitaire selon l'une quelconque des revendications 8 à 12 où le bloc de rinçage (39) est réalisé de manière à former le couvercle d'un coffret encastré (43).

14. Robinetterie sanitaire selon l'une quelconque des revendications 8 à 13 où le bloc de rinçage (39) est combiné à une isolation de manière à former avec cette dernière une enveloppe entourant la base (10).

15. Robinetterie selon la revendication 14 où le bloc de rinçage (39) peut être démonté de l'isolation et où cette dernière reste dans la paroi une fois le montage effectué.
